# EUROPÄISCHE PATENTSCHRIFT

(11) **EP 2 436 474 B1**
(45) Veröffentlichungstag und Bekanntmachung des Hinweises auf die Patenterteilung: **06.11.2013**
(21) Anmeldenummer: 11007417.6
(22) Anmeldetag: 13.09.2011
(51) Int. Cl.: B23K 26/08, B23K 26/38, B23K 26/42, B23K 37/00, B21D 43/04, B21D 43/20, B21D 43/28, B23Q 7/03, B23Q 7/12

(54) **Anordnung und Verfahren zum Abfuehren von Bearbeitungsprodukten von einer Bearbeitungsmaschine mittels eines endlos umlaufenden Fördermittels**
Assembly for and method of discharging processing products from a processing machine using a endless belt conveyor
Agencement et procédé d'évacuation de produits de traitement à partir d'une machine de traitement avec un convoyeur à bande sans fin

(30) Priorität: 30.09.2010 DE 102010037885
(43) Veröffentlichungstag der Anmeldung: 04.04.2012
(73) Patentinhaber: Trumpf Sachsen GmbH, 01904 Neukirch (DE)
(72) Erfinder: Gruhl, Norbert, 02627 Hochkirch (DE); Martin, Jens, 01844 Neustadt (DE); Keimel, Falko, 01877 Bischofswerda (DE); Pieczyk, Uwe, 01904 Weifa (DE); Rodig, Eberhard, 01877 Putzkau (DE)
(74) Vertreter: Kohler Schmid Möbus

(56) Entgegenhaltungen:
- EP-A1- 2 106 865
- CN-Y- 2 640 655
- US-A- 5 180 049
- US-B1- 6 168 006
- US-B1- 6 377 864

## Beschreibung

Die Erfindung betrifft eine Anordnung zum Abführen von Bearbeitungsprodukten von einer Bearbeitungsmaschine zum Bearbeiten von Werkstücken, insbesondere von Blechen, mit einer Umschlageinrichtung, mit einer Transfereinrichtung sowie mit einem Entladeplatz, wobei
- die Umschlageinrichtung von der Bearbeitungsmaschine kommende Bearbeitungsprodukte aufnimmt und an die Transfereinrichtung übergibt,
- die als maschinelle Fördereinrichtung mit einem endlos umlaufenden Fördermittel ausgebildete Transfereinrichtung zwischen der Umschlageinrichtung und dem Entladeplatz angeordnet ist und an die Transfereinrichtung übergebene Bearbeitungsprodukte mittels des Fördermittels der maschinellen Fördereinrichtung zu dem Entladeplatz transferierbar sind und
- an dem Entladeplatz an die Transfereinrichtung übergebene Bearbeitungsprodukte aufnehmbar sind.

Die Erfindung betrifft des Weiteren eine Anordnung für die Fertigung, die eine Anordnung der vorstehenden Art sowie eine Bearbeitungsmaschine zum Bearbeiten von Werkstücken, insbesondere von Blechen, umfasst.

Außerdem betrifft die Erfindung ein mit der eingangs genannten Anordnung durchführbares Verfahren zum Abführen von Bearbeitungsprodukten sowie ein Fertigungsverfahren, welches von dem Verfahren Gebrauch macht.

Gattungsgemäßer Stand der Technik ist offenbart in US 5,180,049 A. Diese Druckschrift betrifft eine Anlage zur Bearbeitung von Blechen. Ein an einer Bearbeitungsmaschine bearbeitetes Blech wird nach dem Verlassen der Bearbeitungsmaschine auf einen Förderer aufgeschoben. Dabei kommt das bearbeitete Blech auf einer Werkstückauflage des Förderers zu liegen, die von mehreren Bürsten gebildet wird. Die einzelnen Bürsten der Werkstückauflage sind an zwei endlos umlaufenden Zahnriemen angebracht und in Umlaufrichtung der Zahnriemen voneinander beabstandet. Der Förderer insgesamt ist in eine stationäre Basis der Anlage für die Blechbearbeitung integriert.

Weiterer Stand der Technik ist bekannt aus EP 2 106 865 A1, US 6,168,006 B1 und US 6,377,864 B1.

EP 2 106 865 A1 zeigt in den Figuren 15 bis 28 eine Umschlageinrichtung in Form eines Entlademoduls, mittels dessen Bearbeitungsprodukte, die zuvor an einer Blechbearbeitungsmaschine erzeugt worden sind, aufgenommen und anschließend auf einer Sammelpalette abgelegt werden. Die auf diese Weise mit den Bearbeitungsprodukten beladene Sammelpalette wird in der betrieblichen Praxis zunächst in ein dem Entlademodul benachbartes Lagerregal bewegt und von dort mittels eines Gabelstaplers zu einem von der maschinellen Anordnung für die Blechbearbeitung abliegenden Entladeplatz transportiert. Die auf diese Art und Weise zu dem Entladeplatz transferierten Bearbeitungsprodukte werden an dem Entladeplatz manuell von der Sammelpalette aufgenommen.

Aus US 6,168,006 B1 ist eine Vorrichtung zum Sortieren von Werkstückteilen an einer Maschine zum schneidenden Bearbeiten von Werkstücken bekannt. Im Falle einer Ausführungsform der Sortiervorrichtung gelangen die Werkstückteile über eine Zuförderrutsche auf ein Förderband eines Bandförderers. Der Bandförderer übergibt die abzuführenden Werkstückteile je nach Laufrichtung des Förderbandes an eine von zwei Abförderrutschen. Eine Bewegbarkeit des genannten Bandförderers in eine Gebrauchslage oder in einer Außergebrauchslage ist nicht offenbart.

US 6,377,864 B1 betrifft eine Anlage für die Blechbearbeitung, in welcher an einem Bearbeitungszentrum erstellte Bearbeitungsprodukte automatisiert von dem Bearbeitungszentrum abgeführt werden. Zu diesem Zweck vorgesehen sind ein Entladearm, eine Sortiereinheit, ein Abfördersystem sowie eine Stapeleinheit. Weder der Entladearm noch die Sortiereinheit, das Abfördersystem oder die Stapeleinheit sind als maschinelle Fördereinrichtung mit einem endlos umlaufenden Fördermittel beschrieben.

Die Aufgabe der vorliegenden Erfindung besteht ausgehend von dem gattungsgemäßen Stand der Technik darin, eine hohe Flexibilität bei der Abfuhr von Bearbeitungsprodukten von einer Bearbeitungsmaschine zu einem Entladeplatz für die Bearbeitungsprodukte zu ermöglichen.

Erfindungsgemäß gelöst wird diese Aufgabe durch die Anordnungen nach den Patentansprüchen 1 und 10 sowie durch die Verfahren nach den Patentansprüchen 11 und 15.

Gemäß den genannten Patentansprüchen ist als Transfereinrichtung eine maschinelle Fördereinrichtung mit einem endlos umlaufenden Fördermittel vorgesehen, an welches die Umschlageinrichtung die von der Bearbeitungsmaschine abzuführenden Bearbeitungsprodukte übergibt. Von dem Fördermittel werden die an dieses übergebenen Bearbeitungsprodukte in Richtung Entladeplatz weiterbewegt. Als Fördereinrichtung mit endlos umlaufendem Fördermittel in Frage kommen beispielsweise Bandförderer und Kratzerförderer. Bevorzugt eingesetzt werden Gurtbandförderer mit wenigstens einem endlos umlaufenden Fördergurt. Bei entsprechender Beschaffenheit der abzuführenden Bearbeitungsprodukte kann anstelle des Fördergurtes auch ein Gliederband, beispielsweise ein Plattenband, vorgesehen sein. In jedem Fall sorgt die maschinelle Fördereinrichtung bzw. deren endlos umlaufendes Fördermittel dafür, dass die von der Umschlageinrichtung übernommenen Bearbeitungsprodukte von der Fördereinrichtung bzw. deren Fördermittel selbst in Richtung auf den Entladeplatz weiterbewegt werden. Die maschinelle Fördereinrichtung kann den Transfer der Bearbeitungsprodukte zu dem Entladeplatz vollständig oder über eine Teilstrecke übernehmen. Für die Umschlageinrichtung zugänglich ist die maschinelle Fördereinrichtung lediglich in der Gebrauchslage. In der Außergebrauchslage ist die maschinelle Fördereinrichtung vor schädlichen Einflüssen, beispielsweise vor Verschmutzung, geschützt. Die maschinell betriebenen Komponenten der erfindungsgemäßen Anordnung und die maschinell ausgeführten Schritte der erfindungsgemäßen Verfahren können mittels einer herkömmlichen numerischen Steuerung gesteuert werden.

Besondere Ausführungsarten der Anordnungen und der Verfahren nach den unabhängigen Patentansprüchen ergeben sich aus den abhängigen Patentansprüchen 2 bis 9 und 12 bis 14.

In bevorzugter Ausgestaltung der Erfindung besteht eine Wahlmöglichkeit insofern, als zusätzlich zu der erfindungsgemäßen Transfereinrichtung mit endlos umlaufendem Fördermittel ein Produktträger mit einer ortsfesten Produktauflage zur Verfügung steht, an welche von der Umschlageinrichtung Bearbeitungsprodukte übergeben werden können (Patentansprüche 2, 12). Die betreffenden Anordnungen und Verfahren zeichnen sich aufgrund der bestehenden Wahlmöglichkeit durch eine hohe Flexibilität aus. Nach der Produktübergabe kann der Produktträger gemeinschaftlich mit den Bearbeitungsprodukten zu einem Entladeplatz transportiert werden. Es besteht aber beispielsweise auch die Möglichkeit, den Produktträger mit den Bearbeitungsprodukten an einem Lager einzulagern. Beispielsweise aufgrund der Beschaffenheit der abzuführenden Bearbeitungsprodukte, etwa aufgrund ihres Gewichtes oder ihrer Temperatur, kann es zweckmäßig sein, anstelle der maschinellen Fördereinrichtung mit umlaufendem Fördermittel den Produktträger mit ortsfester Produktauflage zu verwenden. Für den Abtransport des beladenen Produktträgers mit ortsfester Produktauflage kommen verschiedenartige Einrichtungen in Frage, beispielsweise Hubstapler, Regalbediengeräte, aber auch die maschinelle Fördereinrichtung mit dem endlos umlaufenden Fördermittel. Der Entladeplatz des Produktträgers kann mit dem Entladeplatz für die mittels der maschinellen Fördereinrichtung transferierten Bearbeitungsprodukte übereinstimmen, aber auch von diesem Entladeplatz verschieden sein.

In weiterer bevorzugter Ausgestaltung der Erfindung ist vorgesehen, dass der Produktträger mit ortsfester Produktauflage mittels einer Transportvorrichtung wahlweise in eine Gebrauchslage oder in eine Außergebrauchslage bewegt werden können (Patentansprüche 3, 13). Für die Umschlageinrichtung zugänglich ist lediglich die in der Gebrauchslage befindliche Einrichtung. Die ungenutzte Einrichtung befindet sich derweil in der Außergebrauchslage, in welcher sie vor schädlichen Einflüssen, beispielsweise vor Verschmutzung, geschützt ist und außerdem die Abläufe an der genutzten Einrichtung nicht behindert.

Im Falle einer weiteren bevorzugten Erfindungsbauart ist ein Lager mit wenigstens einem Lagerplatz für an der Bearbeitungsmaschine zu bearbeitende Werkstücke und/oder mit wenigstens einem Lagerplatz für Bearbeitungsprodukte vorgesehen. Zweckmäßigerweise wird das Lager für die Werkstücke und/oder für die Bearbeitungsprodukte erfindungsgemäß außerdem dazu genutzt, um die maschinelle Fördereinrichtung und/oder den Produktträger mit ortsfester Produktauflage in der Außergebrauchslage aufzunehmen (Patentanspruch 4).

Verfügt das Lager über ein Lagerregal mit einem Regalbediengerät, wie dies an der erfindungsgemäßen Anordnung gemäß Patentanspruch 5 vorgesehen ist, so lässt sich das Regalbediengerät nicht nur zum Ein- und Auslagern von zu bearbeitenden Werkstücken und/oder von Bearbeitungsprodukten sondern darüber hinaus auch als Transportvorrichtung einsetzen, mittels derer die maschinelle Fördereinrichtung und/oder der Produktträger mit ortsfester Produktauflage aus der Außergebrauchslage an einem Lagerplatz des Lagerregals in die Gebrauchslage bewegt werden können. In weiterer Ausgestaltung der Erfindung kann das Regalbediengerät zusätzlich oder alternativ die maschinelle Fördereinrichtung und/oder den Produktträger mit ortsfester Produktauflage aus der Gebrauchslage in die Außergebrauchslage an einem Lagerplatz des Lagerregals überführen.

Zweckmäßigerweise sind die maschinelle Fördereinrichtung und/oder der Produktträger mit ortsfester Produktauflage in der Gebrauchslage an einer Tragstruktur gelagert (Patentanspruch 6). Die Tragstruktur sorgt für eine definierte Anordnung der maschinellen Fördereinrichtung bzw. des Produktträgers und wird in weiterer Ausgestaltung der Erfindung zudem dazu genutzt, die Umschlageinrichtung bei deren Bewegung zu dem Fördermittel der maschinellen Fördereinrichtung und/oder zu der ortsfesten Produktauflage des Produktträgers zu führen (Patentanspruch 7).

Der Entladevorgang kann im Falle der Erfindung vorrichtungs- und verfahrensbezogen auf unterschiedliche Art und Weise gestaltet sein. Denkbar ist beispielsweise ein insbesondere kostengünstiges manuelles Entladen der abzuführenden Bearbeitungsprodukte und eine dementsprechende Gestaltung des Entladeplatzes. In diesen Fällen ist an dem Entladeplatz vorzugsweise ein Entladetisch vorgesehen, von dem die in Rede stehenden Bearbeitungsprodukte von hierfür bereitgestelltem Personal aufzunehmen sind. Aus Gründen der Ergonomie kann der Entladetisch eine höhenverstellbare Produktauflage für die Bearbeitungsprodukte aufweisen. Im Falle der Blechbearbeitung vereinfacht sich das manuelle Entladen dann in erheblichem Maße, wenn dem Entladeplatz die bearbeiteten Bleche einzeln zugeführt werden. Denkbar ist zudem ein getrennter Transfer von Fertigteilen, z.B. von Blech-Fertigteilen, und von Bearbeitungsresten, etwa von Blech-Restgittern, zu dem Entladeplatz. Die Produktauflage des Entladeplatzes kann feststehend sein oder alternativ mit den darauf abgelegten Bearbeitungsprodukten bewegt werden. In dem letztgenannten Fall können die Bearbeitungsprodukte besonders schnell entladen werden.

Im Interesse einer Automatisierung der Abläufe ist in bevorzugter Ausgestaltung der Erfindung an dem Entladeplatz eine maschinelle Entladeeinrichtung vorgesehen (Patentanspruch 8). Mittels der maschinellen Entladeeinrichtung werden sämtliche oder ein Teil der abzuführenden Bearbeitungsprodukte von der Produktauflage des Entladeplatzes aufgenommen. Auch in diesem Fall kann die Produktauflage des Entladeplatzes stillstehen oder sich bewegen.

Eine maschinelle Entladeeinrichtung, wie sie erfindungsgemäß bevorzugt wird, ist in Patentanspruch 9 beschrieben. Wesentliche Komponenten dieser Entladeeinrichtung sind ein Übergabeförderer und eine Produktablage. Der Übergabeförderer bewegt die zu entnehmenden Bearbeitungsprodukte auf der Produktauflage des Entladeplatzes mit einer Produktbewegung in einer Entladerichtung. Die Produktablage ist in Schwerkraftrichtung unterhalb der an dem Übergabeförderer bewegten Bearbeitungsprodukte angeordnet und wird gleichzeitig mit der Produktbewegung an dem Übergabeförderer in der Entladerichtung über die in dieser Richtung gelegene Begrenzung der Produktauflage des Entladeplatzes hinaus bewegt. Dadurch gelangen die Bearbeitungsprodukte automatisiert von der Produktauflage des Entladeplatzes auf die darunter liegende Produktablage. Diese kann nach der Aufnahme der abzuführenden Bearbeitungsprodukte aus dem Nahbereich der erfindungsgemäßen Anordnung abtransportiert werden.

Sowohl im Falle des manuellen als auch im Falle des automatisierten Entladens kann es zweckmäßig sein, die abzuführenden Bearbeitungsprodukte für die Aufnahme an dem Entladeplatz vorzubereiten. In diesem Sinne wird im Falle der Erfindungsvariante nach Patentanspruch 14 verfahren. Zur Vorbereitung für die Aufnahme an dem Entladeplatz können Bearbeitungsprodukte beispielsweise auf ein handhabbares Maß dimensioniert werden. Die Vorbereitung der Bearbeitungsprodukte kann an unterschiedlichen Einrichtungen der erfindungsgemäßen Anordnungen bzw. an unterschiedlichen Stellen in dem erfindungsgemäßen Verfahrensablauf erfolgen. Beispielsweise Restgitter einer schneidenden Blechbearbeitung können bereits an der Bearbeitungsmaschine in entsprechend dimensionierte Einzelteile zerlegt werden.

Nachfolgend wird die Erfindung anhand beispielhafter schematischer Darstellungen näher erläutert. Es zeigen:
- Figuren 1 und 2: zwei verschiedene Ansichten einer Anordnung für die Blechfertigung mit einer Anordnung erster Bauart zum Abführen von Bearbeitungsprodukten,
- Figuren 3 und 4: eine Anordnung für die Blechfertigung mit einer Anord-nung zweiter Bauart zum Abführen von Bearbeitungs-produkten.
- Figur 5: eine Anordnung für die Blechfertigung mit einer Anord-nung dritter Bauart zum Abführen von Bearbeitungs-produkten,
- Figuren 6 und 7: eine Anordnung für die Blechfertigung mit einer Anord-nung vierter Bauart zum Abführen von Bearbeitungs-produkten und
- Figur 8: die Umschlageinrichtung der Anordnungen gemäß den Figuren 1 bis 7 in Einzeldarstellung.

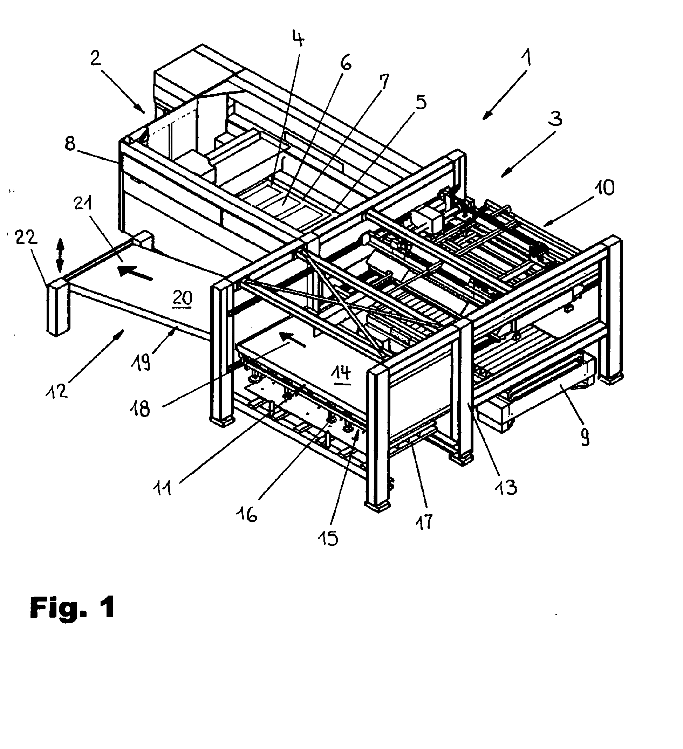

Gemäß Figur 1 umfasst eine Anordnung 1 für die Blechfertigung eine Bearbeitungsmaschine in Form einer Laserschneidmaschine 2 zum Schneiden von Blechen sowie eine Anordnung 3 zum Abführen von Bearbeitungsprodukten von der Laserschneidmaschine 2.

Bei der Laserschneidmaschine 2 handelt es sich um eine Maschine der "TruLaser Serie 5000", die von der Firma TRUMPF, 71254 Ditzingen, Deutschland, angeboten wird. Mit der Laserschneidmaschine 2 können Bleche 4 mit einer Blechdicke bis 30 mm geschnitten werden. Während der Bearbeitung ist das betreffende Blech 4 auf einer Arbeitspalette 5 der Laserschneidmaschine 2 gelagert. Als Bearbeitungsprodukte erzeugt die Laserschneidmaschine 2 aus einem Blech 4 Fertigteile 6 sowie ein Restgitter 7.

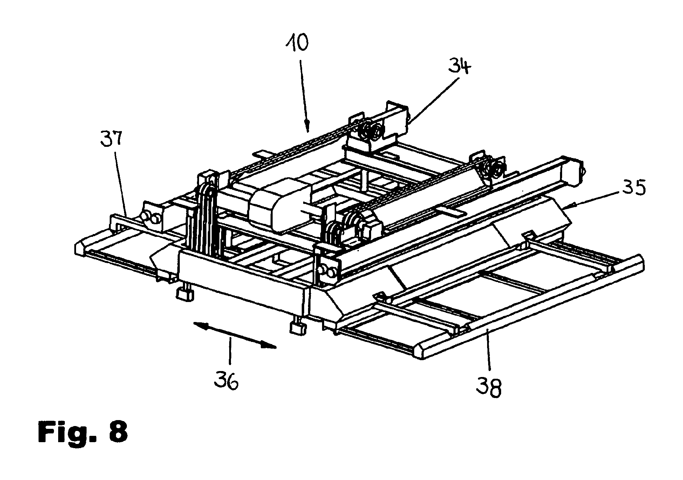

Die Anordnung 3 zum Abführen von Bearbeitungsprodukten ist einer Einhausung 8 der Laserschneidmaschine 2 unmittelbar benachbart. Sie umfasst einen Palettentisch 9 herkömmlicher Bauart, eine nachstehend zu Figur 8 im Einzelnen beschriebene Umschlageinrichtung 10, eine Transfereinrichtung in Form einer maschinellen Fördereinrichtung 11 sowie einen Entladeplatz 12.

Der Palettentisch 9 ist im Innern einer Tragstruktur 13 aufgestellt, die ihrerseits die Umschlageinrichtung 10 sowie die maschinelle Fördereinrichtung 11 zur Bewegung in horizontaler Richtung führt. Die maschinelle Fördereinrichtung 11 ist als herkömmlicher Gurtbandförderer mit einem Fördergurt 14 ausgeführt, der als endloses Fördermittel umläuft. An die maschinelle Fördereinrichtung 11 ist ein an deren Unterseite angeordneter Saugerrahmen 15 üblicher Bauart angebunden. Dieser ist mit einer Mehrzahl von heb- und senkbaren Saugern 16 versehen. Die Sauger 16 können auf zu bearbeitende Bleche 4 zugreifen, die auf einer Rohblechpalette 17 abgelegt sind. Der Entladeplatz 12 schließt sich in einer Förderrichtung 18 der maschinellen Fördereinrichtung 11 unmittelbar an diese an. Er ist als Entladeplatz zum manuellen Entladen der abzuführenden Bearbeitungsprodukte ausgeführt und mit einem Bandförderer 19 versehen. Als Produktauflage des Entladeplatzes 12 weist der Bandförderer 19 ein endloses Auflageband 20 auf. Das Auflageband 20 ist motorisch angetrieben und bewegt sich mit seinem Obertrum in Richtung eines Pfeils 21. Mit seinem von der maschinellen Fördereinrichtung 11 abliegenden Ende ruht der Bandförderer 19 auf höhenverstellbaren Stützen 22. Durch Höheneinstellung der Stützen 22 kann der Bandförderer 19 an die Bedürfnisse von zum Entladen eingesetzten Bedienern angepasst werden. An der Tragstruktur 13 ist der Bandförderer 19 schwenkbeweglich gelagert.

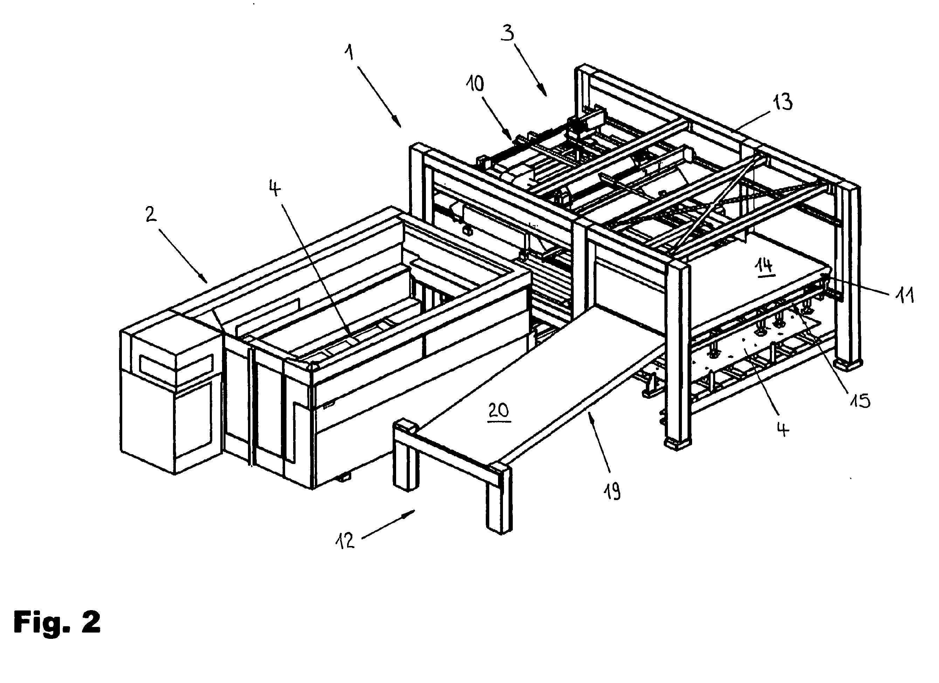

Nach Beendigung einer Blechbearbeitung wird die Arbeitspalette 5 mit den darauf aufliegenden Fertigteilen 6 und dem Restgitter 7 eines einzelnen Bleches 4 durch eine hierfür vorgesehene Öffnung in der Einhausung 8 der Laserschneidmaschine 2 auf den Palettentisch 9 gezogen. Von dort werden die Bearbeitungsprodukte durch die Umschlageinrichtung 10 aufgenommen und dabei von dem Palettentisch 9 angehoben. Noch während der Blechbearbeitung hat der Saugerrahmen 15 an der Unterseite der maschinellen Fördereinrichtung 11 mittels der Sauger 16 ein Blech 4 von der Rohblechpalette 17 aufgenommen. Das aufgenommene Blech 4 wird mittels der angehobenen Sauger 16 gehalten. Die maschinelle Fördereinrichtung 11 sowie der Saugerrahmen 15 mit dem daran haftenden Blech 4 befinden sich zunächst in der Position gemäß den Figuren 1 und 2.

Hat die Umschlageinrichtung 10 die Fertigteile 6 und das Restgitter 7 von der auf den Palettentisch 9 gezogenen Arbeitspalette 5 aufgenommen und befinden sich die Fertigteile 6 und das Restgitter 7 in der angehobenen Stellung, so verfährt die maschinelle Fördereinrichtung 11 aus der Position gemäß den Figuren 1 und 2 in horizontaler Richtung unter die Umschlageinrichtung 10 und die von dieser aufgenommenen Bearbeitungsprodukte. Die Verfahrbewegung der maschinellen Fördereinrichtung 11 wird mittels eines motorischen Verfahrantriebes herkömmlicher Bauart bewirkt. Bei ihrer Verfahrbewegung nimmt die maschinelle Fördereinrichtung 11 den Saugerrahmen 15 und das daran haftende Blech 4 mit. Am Ende der Verfahrbewegung der maschinellen Fördereinrichtung 11 kommen diese unter der Umschlageinrichtung 10 und den daran gehaltenen Bearbeitungsprodukten und das Blech 4 an dem Saugerrahmen 15 oberhalb der auf dem Palettentisch 9 gelagerten Arbeitspalette 5 zu stehen. Nun übergibt die Umschlageinrichtung 10 die Fertigteile 6 und das Restgitter 7 auf den stillstehenden Fördergurt 14 der maschinellen Fördereinrichtung 11, und der Saugerrahmen 15 legt das von ihm aufgenommene Blech 4 auf der von dem Palettentisch 9 gelagerten Arbeitspalette 5 ab.

Sind die Fertigteile 6 und das Restgitter 7 des bearbeiteten Bleches 4 an die maschinelle Fördereinrichtung 11 übergeben und hat der Saugerrahmen 15 das zu bearbeitende Blech 4 auf der Arbeitspalette 5 an dem Palettentisch 9 abgelegt, so verfährt die maschinelle Fördereinrichtung 11 mit nach wie vor stillstehendem Fördergurt 14 und den auf diesem aufliegenden Bearbeitungsprodukten zurück in ihre Ausgangsposition gemäß den Figuren 1 und 2. Sobald diese Position erreicht ist, wird der motorische Antrieb der maschinellen Fördereinrichtung 11 eingeschaltet und der Fördergurt 14 läuft motorisch angetrieben um. Infolgedessen werden die auf dem Obertrum des Fördergurtes 14 abgelegten Fertigteile 6 und das Restgitter 7 in Förderrichtung 18 bewegt und dabei auf das Auflageband 20 des Bandförderers 19 an dem Entladeplatz 12 übergeben. Das Auflageband 20 des Bandförderers 19 bewegt sich mit einer auf die Geschwindigkeit des Fördergurtes 14 der maschinellen Fördereinrichtung 11 abgestimmten Geschwindigkeit in Richtung des Pfeils 21. Von dem sich bewegenden Auflageband 20 werden die Bearbeitungsprodukte von der oder den hierfür eingesetzten Personen manuell entladen. Anstelle des motorisch angetriebenen Bandförderers 19 ist an dem Entladeplatz 12 auch eine Entladerutsche denkbar, auf welche der umlaufende Fördergurt 14 der maschinellen Fördereinrichtung 11 die abzuführenden Bearbeitungsprodukte aufschiebt.

Um das manuelle Entladen des Restgitters 7 an dem Entladeplatz 12 zu erleichtern, kann das Restgitter 7 zum Abschluss der Blechbearbeitung in Teile zerlegt werden, die an dem Entladeplatz 12 auf handhabungsfreundliche Art und Weise aufgenommen werden können.

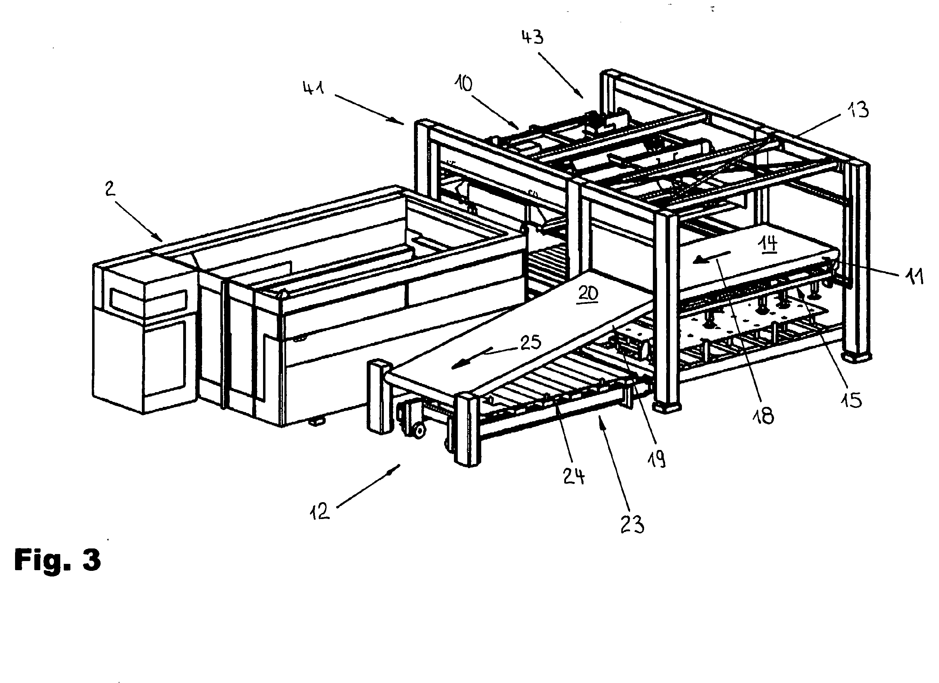

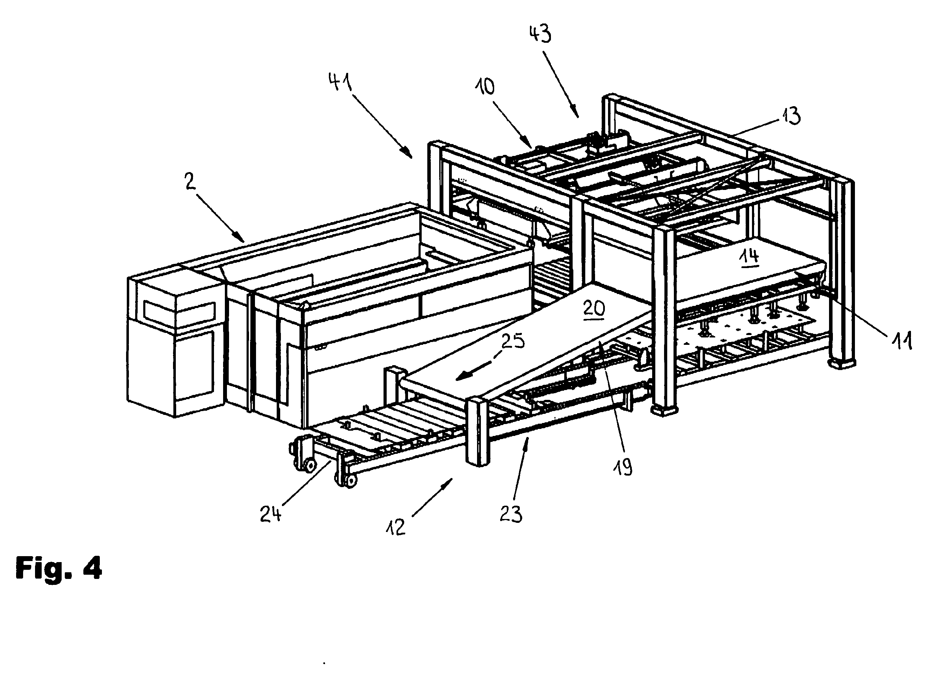

Eine in den Figuren 3 und 4 gezeigte Anordnung 41 für die Blechfertigung unterscheidet sich von der Anordnung 1 gemäß den Figuren 1 und 2 lediglich durch die Gestaltung des Entladeplatzes 12 einer Anordnung 43 zum Abführen von Bearbeitungsprodukten. Der Entladeplatz 12 der Anordnung 43 ist mit einer maschinellen Entladeeinrichtung 23 versehen. Als Produktauflage des Entladeplatzes 12 dient auch an der Anordnung 43 das Auflageband 20 des Bandförderers 19. Auf das Auflageband 20 werden bei der Bearbeitung eines einzelnen Bleches 4 erstellte Bearbeitungsprodukte, im Einzelnen Fertigteile 6 und ein Restgitter 7, mittels der maschinellen Fördereinrichtung 11 transferiert. Abweichend von den Verhältnissen gemäß den Figuren 1 und 2 fungiert der Bandförderer 19 im Falle der Anordnung 43 als Übergabeförderer. Als solcher ist der Bandförderer 19 mit einer verfahrbaren Produktablage 24 kombiniert. Gemeinsam bilden der motorisch angetriebene Bandförderer 19 und die gleichfalls motorisch angetriebene Produktlage 24 die maschinelle Entladeeinrichtung 23.

Die Produktablage 24 ist in Schwerkraftrichtung unterhalb der mit dem Auflageband 20 des Bandförderers 19 bewegten Bearbeitungsprodukte angeordnet. Bewegen sich die Bearbeitungsprodukte auf dem Auflageband 20 des Band- bzw. Übergabeförderers 19 mit einer Produktbewegung in einer Entladerichtung (Pfeil) 25, so verfährt die Produktablage 24 mit einer auf die Produktbewegung abgestimmten und zeitgleich mit der Produktbewegung ausgeführten Ablagebewegung ebenfalls in der Entladerichtung 25. Ausgehend von der Position gemäß Figur 3 fährt die Produktablage 24 abgestimmt auf die Bewegung der Bearbeitungsprodukte auf dem Band- bzw. Übergabeförderer 19 unter diesem heraus. Die Verfahrbewegung der Produktablage 24 und die Produktbewegung an dem Band- bzw. Übergabeförderer 19 sind derart koordiniert, dass Bearbeitungsprodukte von dem Band- bzw. Übergabeförderer 19 unter Schwerkraftwirkung auf die Produktablage 24 übergeben und dabei auf letzterer hintereinander abgelegt werden. Figur 4 zeigt die Produktablage 24 in einer Position, welche die Produktablage 24 während der Aufnahme von Bearbeitungsprodukten einnimmt. Ist die Aufnahme von Bearbeitungsprodukten abgeschlossen, so bewegt sich die Produktablage 24 aus ihrer ausgefahrenen Stellung zurück in die Position gemäß Figur 3.

Auf die beschriebene Art und Weise werden mittels der maschinellen Entladeeinrichtung 23 insbesondere Restgitter 7 entladen. Das manuelle Entladen von Restgittern 7 wird auf diese Art und Weise vermieden. Wird auf eine Zerkleinerung des bei der Blechbearbeitung erzeugten Restgitters 7 verzichtet, so kann das Restgitter 7 als Einheit maschinell entladen werden. Es ist denkbar, die abzuführenden Fertigteile 6 und das Restgitter 7 des bearbeiteten Bleches 4 voneinander getrennt zu dem Entladeplatz 12 zu transferieren. Zu diesem Zweck sind die Bearbeitungsprodukte vor Erreichen des Entladeplatzes 12 vorzusortieren. Bei entsprechender Bauart kann dies mittels der Umschlageinrichtung 10 erfolgen. Die Fertigteile 6 können manuell von dem Auflageband 20 aufgenommen werden. Es besteht aber auch die Möglichkeit, die Fertigteile 6 mittels der maschinellen Entladeeinrichtung 23 an die Produktablage 24 zu übergeben. In jedem Fall werden die Bearbeitungsprodukte abschließend von der Produktablage 24 oder gemeinsam mit dieser aufgenommen und aus dem Nahbereich der Anordnung 41 für die Blechfertigung entfernt.

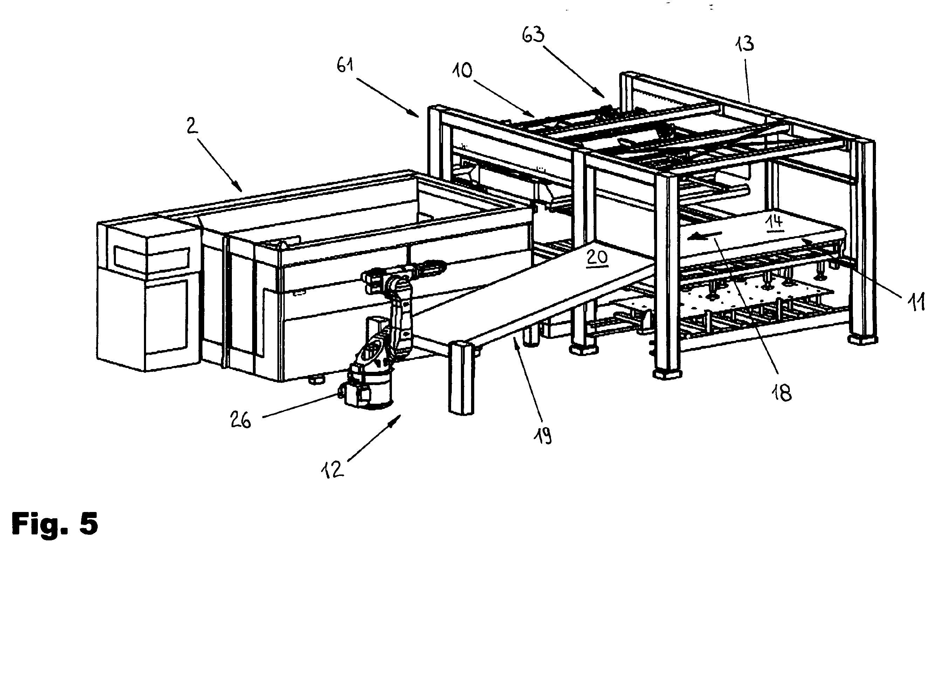

Eine maschinelle Entladeeinrichtung zweiter Bauart ist im Falle einer in Figur 5 dargestellten Anordnung 61 für die Blechfertigung vorgesehen. Als maschinelle Entladeeinrichtung einer Anordnung 63 zum Abführen von Bearbeitungsprodukten dient in diesem Fall ein Entladeroboter 26, welcher die abzuführenden Bearbeitungsprodukte von dem Auflageband 20 des Bandförderers 19 aufnimmt. Wie im Falle des manuellen Entladens ist es auch bei Einsatz des Entladeroboters 26 zweckmäßig, Restgitter 7 zur Vorbereitung auf das Entladen in handhabbare Teile zu zerlegen.

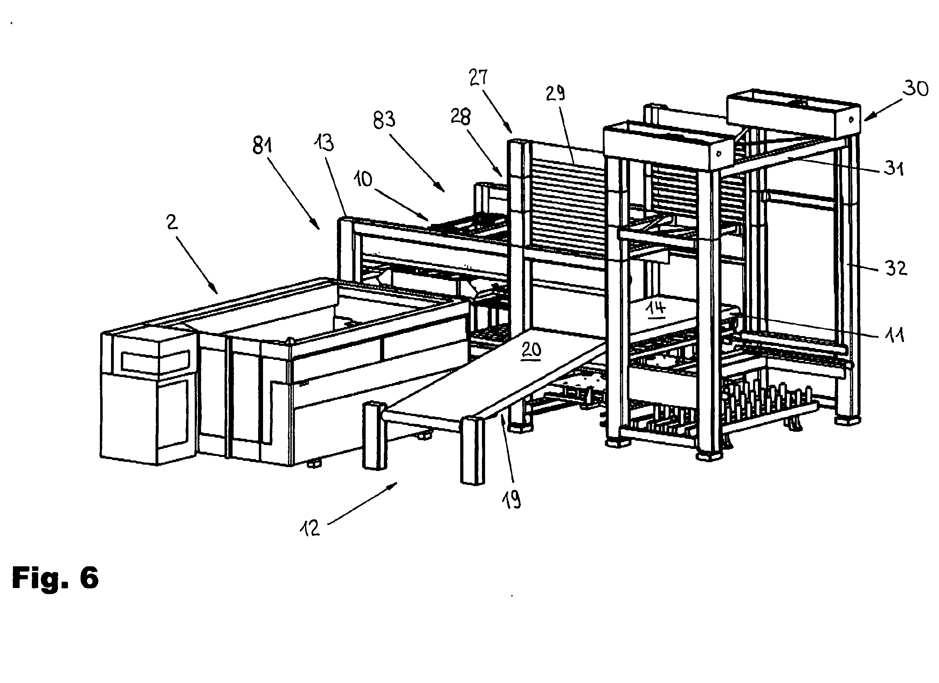

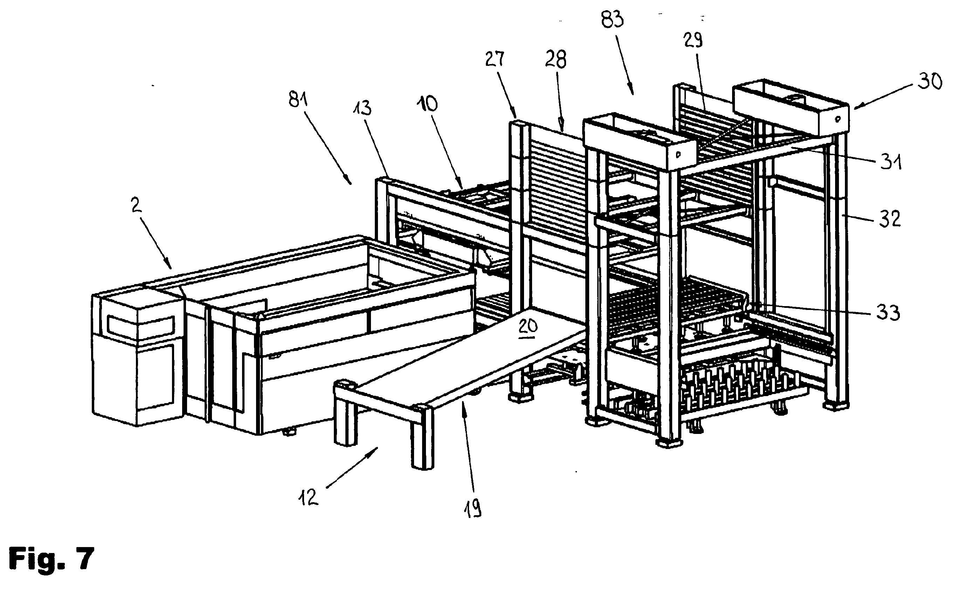

Eine Anordnung 81 für die Blechfertigung ist in den Figuren 6 und 7 dargestelllt. Abweichend von den Anordnungen 1, 41, 61 gemäß den Figuren 1 bis 5 umfasst die Anordnung 81 als Teil einer Anordnung 83 zum Abführen von Bearbeitungsprodukten ein Lager 27. Das Lager 27 weist ein Lagerregal 28 auf, welches auf die Tragstruktur 13 für die Umschlageinrichtung 10 und die maschinelle Fördereinrichtung 11 aufgesetzt ist. Lagerplätze 29 für an der Laserschneidmaschine 2 zu bearbeitende Bleche 4 sowie für Bearbeitungsprodukte sind an dem Lagerregal 28 übereinander angeordnet. Zum Ein- und Auslagern dient ein Regalbediengerät 30 herkömmlicher Bauart. In gewohnter Weise umfasst das Regalbediengerät 30 einen Hubrahmen 31, der an einem Gestell 32 in vertikaler Richtung verfahrbar ist und der die üblichen maschinellen Entnahme- und Übernahmeeinrichtungen aufweist, mittels derer mit Blechen 4 bzw. mit Bearbeitungsprodukten beladene Paletten von Lagerplätzen 29 des Lagerregals 28 aufgenommen bzw. an Lagerplätze 29 des Lagerregals 28 übergeben werden können.

An der Anordnung 83 gemäß den Figuren 6 und 7 wird das Regalbediengerät 30 zusätzlich dazu genutzt, die maschinelle Fördereinrichtung 11 sowie eine als Produktträger mit ortsfester Produktauflage vorgesehene Entladepalette 33 in eine Gebrauchslage oder in eine Außergebrauchslage zu überführen. In Figur 6 nimmt die maschinelle Fördereinrichtung 11 ihre Gebrauchslage ein, in welcher sie an der Tragstruktur 13 für die Umschlageinrichtung 10 und somit für von der Umschlageinrichtung 10 zu übergebende Bearbeitungsprodukte zugänglich ist. Figur 7 zeigt die Entladepalette 33 in der Gebrauchslage an der Tragstruktur 13. Bei der Entladepalette 33 handelt es sich im gezeigten Beispielsfall um eine herkömmliche Lagerpalette, wie sie an Regallagern üblicherweise verwendet wird.

Befindet sich die maschinelle Fördereinrichtung 11 in der Gebrauchslage an der Tragstruktur 13, so ist die Entladepalette 33 an dem Lagerregal 28 des Lagers 27 eingelagert und umgekehrt. Im eingelagerten Zustand sind die Entladepalette 33 sowie die maschinelle Fördereinrichtung 11 in den Figuren 6 und 7 der Übersichtlichkeit halber nicht gezeigt.

Gegen die Entladepalette 33 wird die maschinelle Fördereinrichtung 11 an der Tragstruktur 13 beispielsweise dann ausgetauscht, wenn die abzuführenden Bearbeitungsprodukte, insbesondere deren Gewicht, dies erfordern. Vor der beim Austausch mittels des Regalbediengerätes 30 bewerkstelligten Entnahme der maschinellen Fördereinrichtung 11 aus der Tragstruktur 13 ist die maschinelle Fördereinrichtung 11 von dem an ihrer Unterseite vorgesehenen Saugerrahmen 15 zu entkoppeln. Anschließend wird die maschinelle Fördereinrichtung 11 auf den Hubrahmen 31 des Regalbediengerätes 30 gezogen, der zuvor an dem Gestell 32 auf ein entsprechendes Höhenniveau bewegt worden ist. Nach der Übernahme der maschinellen Fördereinrichtung 11 verfährt der Hubrahmen 31 auf Höhe eines für die maschinelle Fördereinrichtung 11 vorgesehenen Lagerplatzes 29, an welchen die maschinelle Fördereinrichtung 11 schließlich von dem Hubrahmen 31 übergeben wird. Anschließend wird von einem anderen Lagerplatz 29 des Lagerregals 28 die Entladepalette 33 auf den Hubrahmen 31 des Regalbediengerätes 30 übernommen und durch entsprechende Absenkbewegung des Hubrahmens 31 auf das entsprechende Niveau an der Tragstruktur 19 transportiert. Dann wird die Entladepalette 33 von dem Hubrahmen 31 in die Tragstruktur 13 eingeschoben und dort an den Saugerrahmen 15 angekoppelt. Es ergeben sich dann die Verhältnisse gemäß Figur 7.

Auf die ortsfeste Produktauflage der in der Gebrauchslage befindlichen Entladepalette 33 übergibt die Umschlageinrichtung 10 in der eingangs beschriebenen Weise die von der Laserschneidmaschine 2 abzuführenden Bearbeitungsprodukte. Zum Abtransport kann die Entladepalette 33 von dem Saugerrahmen 15 getrennt und anschließend beispielsweise mittels eines Gabelstaplers aus der Tragstruktur 13 entnommen werden. Alternativ besteht die Möglichkeit, dass das Regalbediengerät 30 die beladene Entladepalette 33 aufnimmt und an dem Lagerregal 28 einlagert.

Gemäß Figur 8 umfasst die Umschlageinrichtung 10 einen Tragrahmen 34, an welchem ein Rechenrahmen 35 höhenbeweglich aufgehängt ist. Mit dem Tragrahmen 34 ist die Umschlageinrichtung 10 an der Tragstruktur 13 gelagert. Falls erforderlich kann der Tragrahmen 34 und mit diesem die gesamte Umschlageinrichtung 10 an der Tragstruktur 13 in horizontaler Richtung verfahren.

Der Rechenrahmen 35 der Umschlageinrichtung 10 führt zwei Aufnahmerechen 37, 38, die mittels eines hierfür vorgesehenen motorischen Antriebes in horizontaler Richtung aufeinander zu oder voneinander weg bewegt werden können (Doppelpfeil 36).

In Figur 8 sind die Aufnahmerechen 37, 38 voneinander weg in ihre äußeren Endstellungen verfahren. In diesem Betriebszustand befindet sich die Umschlageinrichtung 10 zu demjenigen Zeitpunkt, zu welchem die mit den Bearbeitungsprodukten beladene Arbeitspalette 5 aus dem Innern der Laserschneidmaschine 2 auf den Palettentisch 9 gezogen worden ist und dort unterhalb der Umschlageinrichtung 10 liegt. Zur Aufnahme der Bearbeitungsprodukte von der Arbeitspalette 5 wird der Rechenrahmen 35 mit den in ihrer äußeren Endstellung befindlichen Aufnahmerechen 37, 38 gegenüber dem Tragrahmen 34 zu der Arbeitspalette 5 hin abgesenkt. Die Absenkbewegung endet, sobald die Aufnahmerechen 37, 38 geringfügig unterhalb der auf der Arbeitspalette 5 gelagerten Bearbeitungsprodukte zu liegen kommen. Danach werden die Aufnahmerechen 37, 38 aufeinander zu bewegt, bis sie die aufzunehmenden Bearbeitungsprodukte untergreifen. Nun wird der Rechenrahmen 35 gemeinsam mit den Aufnahmerechen 37, 38 und den von diesen unterfangenen Bearbeitungsprodukten nach oben bewegt. Dadurch werden die Bearbeitungsprodukte mittels der Aufnahmerechen 37, 38 von der Arbeitspalette 5 an dem Palettentisch 9 abgehoben.

Ist im weiteren Verlauf des Verfahrens zum Abführen von Bearbeitungsprodukten von der Laserschneidmaschine 2 die maschinelle Fördereinrichtung 11 bzw. der Produktträger 33 unter die Umschlageinrichtung 10 gelangt und somit unterhalb der Aufnahmerechen 37, 38 und der von diesen gehaltenen Bearbeitungsprodukte angeordnet, so wird der Rechenrahmen 35 mit den Aufnahmerechen 37, 38 und den Bearbeitungsprodukten so weit abgesenkt, bis die Bearbeitungsprodukte auf dem Fördergurt 14 der maschinellen Fördereinrichtung 11 bzw. auf der ortsfesten Produktauflage der Entladepalette 33 zu liegen kommen. Danach verfahren die Aufnahmerechen 37, 38 voneinander weg in ihre äußeren Endstellungen und der Rechenrahmen 35 kann gemeinschaftlich mit den Aufnahmerechen 37, 38 angehoben werden. Dabei passieren die Aufnahmerechen 37, 38 die an den Fördergurt 14 der maschinellen Fördereinrichtung 11 bzw. an die ortsfeste Produktauflage der Entladepalette 33 übergebenen Bearbeitungsprodukte in vertikaler Richtung. Die Übergabe der Bearbeitungsprodukte von der Umschlageinrichtung 10 an die maschinelle Fördereinrichtung 11 bzw. die Entladepalette 33 ist damit abgeschlossen.

Soll die Umschlageinrichtung 10 zum Vorsortieren der aus der Laserschneidmaschine 2 kommenden Bearbeitungsprodukte genutzt werden, so nimmt die Umschlageinrichtung 10 die Fertigteile 6 und das Restgitter 7 des betreffenden Bleches 4 getrennt voneinander auf. Zu diesem Zweck kann die Umschlageinrichtung 10 mit Saugern ausgerüstet sein, mittels derer die Fertigteile 6 von der Arbeitspalette 5 abgenommen werden. Das Restgitter 7 wird in diesem Fall wie vorstehend beschrieben durch die Aufnahmerechen 37, 38 von der Arbeitspalette 5 abgehoben.

## Patentansprüche

1. Anordnung zum Abführen von Bearbeitungsprodukten (6, 7) von einer Bearbeitungsmaschine (2) zum Bearbeiten von Werkstücken, insbesondere von Blechen (4), mit einer Umschlageinrichtung (10), mit einer Transfereinrichtung sowie mit einem Entladeplatz (12), wobei
• die Umschlageinrichtung (10) von der Bearbeitungsmaschine (2) kommende Bearbeitungsprodukte (6, 7) aufnimmt und an die Transfereinrichtung übergibt,
• die als maschinelle Fördereinrichtung (11) mit einem endlos umlaufenden Fördermittel (14) ausgebildete Transfereinrichtung zwischen der Umschlageinrichtung (10) und dem Entladeplatz (12) angeordnet ist und an die Transfereinrichtung übergebene Bearbeitungsprodukte (6, 7) mittels des Fördermittels (14) der maschinellen Fördereinrichtung (11) zu dem Entladeplatz (12) transferierbar sind und
• an dem Entladeplatz (12) an die Transfereinrichtung übergebene Bearbeitungsprodukte (6, 7) aufnehmbar sind,
**dadurch gekennzeichnet,**
• **dass** die maschinelle Fördereinrichtung (11) mittels einer Transportvorrichtung in eine Gebrauchslage, in welcher das Fördermittel (14) der Fördereinrichtung (11) für von der Umschlageinrichtung (10) zu übergebende Bearbeitungsprodukte (6, 7) zugänglich ist, oder in eine Außergebrauchslage abseits der Gebrauchslage bewegbar ist,
• **dass** an das Fördermittel (14) der in die Gebrauchslage bewegten maschinellen Fördereinrichtung (11) von der Umschlageinrichtung (10) Bearbeitungsprodukte (6, 7) übergebbar sind und
• **dass** an das Fördermittel (14) der in die Gebrauchslage bewegten Fördereinrichtung (11) übergebene Bearbeitungsprodukte (6, 7) mittels des Fördermittels (14) zu dem Entladeplatz (12) transferierbar sind.

2. Anordnung nach Anspruch 1, **dadurch gekennzeichnet, dass** ein Produktträger (33) mit einer ortsfesten Produktauflage vorgesehen ist, an welche von der Umschlageinrichtung (10) Bearbeitungsprodukte (6, 7) übergebbar sind.

3. Anordnung nach Anspruch 2, **dadurch gekennzeichnet, dass** der Produktträger (33) mit ortsfester Produktauflage mittels einer Transportvorrichtung in eine Gebrauchslage, in welcher die Produktauflage des Produktträgers (33) für von der Umschlageinrichtung (10) zu übergebende Bearbeitungsprodukte (6, 7) zugänglich ist, und/oder in eine Außergebrauchslage abseits der Gebrauchslage bewegbar ist.

4. Anordnung nach einem der vorhergehenden Ansprüche, **dadurch gekennzeichnet, dass** ein Lager (27) mit wenigstens einem Lagerplatz (29) für an der Bearbeitungsmaschine (2) zu bearbeitende Werkstücke, insbesondere Bleche (4), und/oder mit wenigstens einem Lagerplatz (29) für Bearbeitungsprodukte (6, 7) vorgesehen ist und dass die maschinelle Fördereinrichtung (11) und/oder der Produktträger (33) mit ortsfester Produktauflage in der Außergebrauchslage an einem Lagerplatz (29) des Lagers (27) eingelagert ist bzw. sind.

5. Anordnung nach Anspruch 4, **dadurch gekennzeichnet, dass** das Lager (27) ein Lagerregal (28) mit wenigstens einem Lagerplatz (29) für an der Bearbeitungsmaschine (2) zu bearbeitende Werkstücke, insbesondere Bleche (4), und/oder mit wenigstens einem Lagerplatz (29) für Bearbeitungsprodukte (6, 7) sowie ein Regalbediengerät (30) für das Lagerregal (28) aufweist und dass das Regalbediengerät (30) des Lagerregals (28) als Transportvorrichtung vorgesehen ist, mittels derer die maschinelle Fördereinrichtung (11) und/oder der Produktträger (33) mit ortsfester Produktauflage aus der Außergebrauchslage an einem Lagerplatz (29) des Lagerregals (28) in die Gebrauchslage bewegbar ist bzw. sind.

6. Anordnung nach einem der vorhergehenden Ansprüche, **dadurch gekennzeichnet, dass** die maschinelle Fördereinrichtung (11) und/oder der Produktträger (33) mit ortsfester Produktauflage in der Gebrauchslage an einer Tragstruktur (13) gelagert ist bzw. sind.

7. Anordnung nach Anspruch 6, **dadurch gekennzeichnet, dass** die Umschlageinrichtung (10) gemeinschaftlich mit von dieser aufgenommenen Bearbeitungsprodukten (6, 7) an der Tragstruktur (13) zu dem Fördermittel (14) der in der Gebrauchslage befindlichen maschinellen Fördereinrichtung (11) und/oder zu der ortsfesten Produktauflage des in der Gebrauchslage befindlichen Produktträgers (33) bewegbar ist.

8. Anordnung nach einem der vorhergehenden Ansprüche, **dadurch gekennzeichnet, dass** an dem Entladeplatz (12) eine maschinelle Entladeeinrichtung (23, 26) vorgesehen ist, mittels derer Bearbeitungsprodukte (6, 7) von einer Produktauflage (20) des Entladeplatzes (12) aufnehmbar sind.

9. Anordnung nach einem der vorhergehenden Ansprüche, **dadurch gekennzeichnet, dass** die maschinelle Entladeeinrichtung (23) an dem Entladeplatz (12)
• einen Übergabeförderer (19), mittels dessen Bearbeitungsprodukte (6, 7) auf der Produktauflage (20) des Entladeplatzes (12) mit einer Produktbewegung in einer Entladerichtung (25) bewegbar sind, sowie
• eine Produktablage (24), die in Schwerkraftrichtung unterhalb der auf der Produktauflage (20) bewegten Bearbeitungsprodukte (6, 7) angeordnet ist und die mit einer auf die Produktbewegung abgestimmten und zeitgleich mit der Produktbewegung ausgeführten Ablagebewegung in der Entladerichtung (25) über die in dieser Richtung gelegene Begrenzung der Produktauflage (20) des Entladeplatzes (12) hinaus bewegbar ist,
aufweist, wobei Bearbeitungsprodukte (6, 7) infolge der Produktbewegung und der zeitgleich damit ausgeführten Ablagebewegung durch die Produktablage (24) von der Produktauflage (20) des Entladeplatzes (12) aufnehmbar sind.

10. Anordnung für die Fertigung, mit einer Bearbeitungsmaschine (2) zum Bearbeiten von Werkstücken, insbesondere von Blechen (4), sowie mit einer Anordnung (3, 43, 63, 83) zum Abführen von Bearbeitungsprodukten (6, 7) von der Bearbeitungsmaschine (2), **gekennzeichnet durch** eine nach einem der vorstehenden Ansprüche ausgebildete Anordnung (3, 43, 63, 83) zum Abführen von Bearbeitungsprodukten (6, 7).

11. Verfahren zum Abführen von Bearbeitungsprodukten (6, 7) von einer Bearbeitungsmaschine (2) zum Bearbeiten von Werkstücken, insbesondere von Blechen (4), wobei
• von der Bearbeitungsmaschine (2) kommende Bearbeitungsprodukte (6, 7) von einer Umschlageinrichtung (10) aufgenommen und die von der Umschlageinrichtung (10) aufgenommenen Bearbeitungsprodukte (6, 7) von der Umschlageinrichtung (10) an ein endlos umlaufendes Fördermittel (14) einer als Transfereinrichtung vorgesehenen maschinellen Fördereinrichtung (11) übergeben werden und
• an die Transfereinrichtung übergebene Bearbeitungsprodukte (6, 7) zu einem Entladeplatz (12) transferiert und dort aufgenommen werden,
**dadurch gekennzeichnet,**
• **dass** die maschinelle Fördereinrichtung (11) mittels einer Transportvorrichtung in eine Gebrauchslage, in welcher das Fördermittel (14) der Fördereinrichtung (11) für von der Umschlageinrichtung (10) zu übergebende Bearbeitungsprodukte (6, 7) zugänglich ist, oder in eine Außergebrauchslage abseits der Gebrauchslage bewegt wird,
• **dass** von der Umschlageinrichtung (10) aufgenommene Bearbeitungsprodukte (6, 7) von der Umschlageinrichtung (10) an das endlos umlaufende Fördermittel (14) der in die Gebrauchslage bewegten maschinellen Fördereinrichtung (11) übergeben werden und
• **dass** Bearbeitungsprodukte, die an das Fördermittel (14) der in die Gebrauchslage bewegten maschinellen Fördereinrichtung (11) übergeben worden sind, mittels des Fördermittels (14) zu dem Entladeplatz (12) transferiert werden.

12. Verfahren nach Anspruch 11, **dadurch gekennzeichnet, dass** von der Umschlageinrichtung (10) aufgenommene Bearbeitungsprodukte (6, 7) von der Umschlageinrichtung (10) an eine ortsfeste Produktauflage eines Produktträgers (33) übergeben werden.

13. Verfahren nach Anspruch 12, **dadurch gekennzeichnet, dass** der Produktträger (33) mit ortsfester Produktauflage wahlweise in eine Gebrauchslage, in welcher die Produktauflage des Produktträgers (33) für die Übergabe von Bearbeitungsprodukten (6, 7) durch die Umschlageinrichtung (10) zugänglich ist, oder in eine Außergebrauchslage abseits der Gebrauchslage bewegt wird.

14. Verfahren nach einem der vorhergehenden Ansprüche, **dadurch gekennzeichnet, dass** die Bearbeitungsprodukte (6, 7) für die Aufnahme an dem Entladeplatz (12) vorbereitet werden.

15. Fertigungsverfahren, im Rahmen dessen Werkstücke, insbesondere Bleche (4), mittels einer Bearbeitungsmaschine (2) bearbeitet und Bearbeitungsprodukte (6, 7) von der Bearbeitungsmaschine (2) abgeführt werden, **gekennzeichnet durch** ein nach einem der Ansprüche 11 bis 14 ausgestaltetes Verfahren zum Abführen von Bearbeitungsprodukten (6, 7) von der Bearbeitungsmaschine (2).

## Claims

1. Arrangement for discharging processing products (6, 7) from a processing machine (2) for processing workpieces, in particular metal sheets (4), having a transhipment device (10), having a transfer device and having an unloading location (12),
• the transhipment device (10) receiving processing products (6, 7) originating from the processing machine (2) and transferring them to the transfer device,
• the transfer device which is constructed as a mechanical conveying device (11) having a continuously rotating conveying means (14) being arranged between the transhipment device (10) and the unloading location (12) and processing products (6, 7) which are transferred to the transfer device being able to be transferred to the unloading location (12) by the conveying means (14) of the mechanical conveying device (11), and
• processing products (6, 7) which are transferred to the transfer device being able to be received at the unloading location (12),
**characterised in that**
• the mechanical conveying device (11) can be moved by means of a transport device into a position for use, in which the conveying means (14) of the conveying device (11) is accessible for processing products (6, 7) which are intended to be transferred by the transhipment device (10), or can be moved into a position for non-use remote from the position for use,
• **in that** processing products (6, 7) can be transferred by the transhipment device (10) to the conveying means (14) of the mechanical conveying device (11) which has been moved into the position for use, and
• **in that** processing products (6, 7) which have been transferred to the conveying means (14) of the conveying device (11) which has been moved into the position for use can be transferred to the unloading location (12) by the conveying means (14).

2. Arrangement according to claim 1, **characterised in that** a product carrier (33) is provided so as to have a fixed product support to which processing products (6, 7) can be transferred by the transhipment device (10).

3. Arrangement according to claim 2, **characterised in that** the product carrier (33) having a fixed product support can be moved by means of a transport device into a position for use, in which the product support of the product carrier (33) is accessible for processing products (6, 7) which are intended to be transferred by the transhipment device (10), and/or can be moved into a position for non-use remote from the position for use.

4. Arrangement according to any one of the preceding claims, **characterised in that** a store (27) having at least one storage location (29) for workpieces, in particular metal sheets (4), to be processed in the processing machine (2) and/or having at least one storage location (29) for processing products (6, 7) is provided and **in that** the mechanical conveying device (11) and/or the product carrier (33) having a fixed product support is/are stored in the position for non-use at a storage location (29) of the store (27).

5. Arrangement according to claim 4, **characterised in that** the store (27) has a storage shelf (28) having at least one storage location (29) for workpieces, in particular metal sheets (4), which are intended to be processed in the processing machine (2) and/or having at least one storage location (29) for processing products (6, 7) and a storage and retrieval device (30) of the storage shelf (28) and **in that** the storage and retrieval device (30) of the storage shelf (28) is provided as a transport device by means of which the mechanical conveying device (11) and/or the product carrier (33) having a fixed product support can be moved from the position for non-use at a storage location (29) of the storage shelf (28) into the position for use.

6. Arrangement according to any one of the preceding claims, **characterised in that** the mechanical conveying device (11) and/or the product carrier (33) having a fixed product support is/are supported by a carrier structure (13) in the position for use.

7. Arrangement according to claim 6, **characterised in that** the transhipment device (10), together with processing products (6, 7) which are received thereby, can be moved on the carrier structure (13) to the conveying means (14) of the mechanical conveying device (11) which is located in the position for use and/or to the fixed product support of the product carrier (33) located in the position for use.

8. Arrangement according to any one of the preceding claims, **characterised in that** there is provided at the unloading location (12) a mechanical unloading device (23, 26) by means of which processing products (6, 7) can be received from a product support (20) of the unloading location (12).

9. Arrangement according to any one of the preceding claims, **characterised in that** the mechanical unloading device (23) at the unloading location (12) has
• a transfer conveyor (19), by means of which processing products (6, 7) on the product support (20) of the unloading location (12) can be moved with a product movement in an unloading direction (25), and
• a product depositing location (24) which is arranged in the direction of gravitational force below the processing products (6, 7) which are moved on the product support (20) and which can be moved with a depositing movement which is adapted to the product movement and which is carried out at the same time as the product movement in the unloading direction (25) beyond the delimitation of the product support (20) of the unloading location (12) located in this direction,
with processing products (6, 7) being able to be received by the product support (20) of the unloading location (12) as a result of the product movement and the depositing movement which is carried out at the same time by the product depositing location (24).

10. Arrangement for production, having a processing machine (2) for processing workpieces, in particular metal sheets (4), and having an arrangement (3, 43, 63, 83) for discharging processing products (6, 7) from the processing machine (2), **characterised by** an arrangement (3, 43, 63, 83) for discharging processing products (6, 7), which arrangement is configured in accordance with any one of the preceding claims.

11. Method for discharging processing products (6, 7) from a processing machine (2) for processing workpieces, in particular metal sheets (4),
• processing products (6, 7) which originate from the processing machine (2) being received by a transhipment device (10) and the processing products (6, 7) received by the transhipment device (10) being transferred by the transhipment device (10) to a continuously rotating conveying means (14) of a mechanical conveying device (11) provided as a transfer device and
• processing devices (6, 7) which are transferred to the transfer device being transferred to an unloading location (12) and being received at that location,
**characterised in that**
• the mechanical conveying device (11) is moved by means of a transport device into a position for use, in which the conveying means (14) of the conveying device (11) is accessible for processing products (6, 7) which are intended to be transferred by the transhipment device (10), or is moved into a position for non-use remote from the position for use,
• **in that** processing products (6, 7) received by the transhipment device (10) are transferred by the transhipment device (10) to the continuously rotating conveying means (14) of the mechanical conveying device (11) which has been moved into the position for use, and
• **in that** processing products which have been transferred to the conveying means (14) of the mechanical conveying device (11) which has been moved into the position for use are transferred to the unloading location (12) by the conveying means (14).

12. Method according to claim 11, **characterised in that** processing products (6, 7) received by the transhipment device (10) are transferred by the transhipment device (10) to a fixed product support of a product carrier (33).

13. Method according to claim 12, **characterised in that** the product carrier (33) having the fixed product support is moved selectively into a position for use in which the product support of the product carrier (33) is accessible for the transfer of processing products (6, 7) by the transhipment device (10) or is moved into a position for non-use remote from the position for use.

14. Method according to any one of the preceding claims, **characterised in that** the processing products (6, 7) are prepared for being received at the unloading location (12).

15. Production method, in the context of which workpieces, in particular metal sheets (4) are processed by means of a processing machine (2) and processing products (6, 7) are discharged from the processing machine (2), **characterised by** a method configured according to any one of claims 11 to 14 for discharging processing products (6, 7) from the processing machine (2).

## Revendications

1. Agencement conçu pour évacuer des produits d'usinage (6, 7) d'une machine d'usinage (2) affectée à l'usinage de pièces, en particulier de tôles (4), comprenant un système de transposition (10), un système de transfert, ainsi qu'un poste de décharge (12), sachant que
• ledit système de transposition (10) reçoit des produits d'usinage (6, 7) en provenance de ladite machine d'usinage (2), et les transmet audit système de transfert,
• ledit système de transfert, réalisé sous la forme d'un système de convoyage automatique (11) muni d'un moyen de convoyage (14) tournant sans fin, est interposé entre ledit système de transposition (10) et ledit poste de décharge (12), et des produits d'usinage (6, 7), transmis audit système de transfert, peuvent être transférés audit poste de décharge (12) à l'aide dudit moyen de convoyage (14) dudit système de convoyage automatique (11), et
• des produits d'usinage (6, 7), transmis audit système de transfert, peuvent être réceptionnés audit poste de décharge (12),
**caractérisé par le fait**
• **que** le système de convoyage automatique (11) peut être mû, au moyen d'un dispositif de transport, vers une position d'utilisation dans laquelle le moyen de convoyage (14) dudit système de convoyage (11) est accessible à des produits d'usinage (6, 7) devant être transmis par le système de transposition (10), ou vers une position de non-utilisation située à l'écart de ladite position d'utilisation,
• **que** des produits d'usinage (6, 7) peuvent être transmis, par ledit système de transposition (10), audit moyen de convoyage (14) dudit système de convoyage automatique (11) mû vers ladite position d'utilisation, et
• **que** des produits d'usinage (6, 7), transmis audit moyen de convoyage (14) dudit système de convoyage (11) mû vers ladite position d'utilisation, peuvent être transférés audit poste de décharge (12) à l'aide dudit moyen de convoyage (14).

2. Agencement selon la revendication 1, **caractérisé par le fait qu'**il est prévu un support (33) de produits, doté d'un élément fixe d'appui de produits auquel des produits d'usinage (6, 7) peuvent être transmis par le système de transposition (10).

3. Agencement selon la revendication 2, **caractérisé par le fait que** le support (33) de produits doté d'un élément fixe d'appui de produits peut être mû, au moyen d'un dispositif de transport, vers une position d'utilisation dans laquelle ledit élément d'appui des produits sur ledit support (33) de produits est accessible à des produits d'usinage (6, 7) devant être transmis par le système de transposition (10), et/ou vers une position de non-utilisation située à l'écart de ladite position d'utilisation.

4. Agencement selon l'une des revendications précédentes, **caractérisé par le fait qu'**il est prévu une zone de stockage (27) munie d'au moins un poste d'emmagasinage (29) dédié à des pièces, en particulier des tôles (4) devant être usinées sur la machine d'usinage (2), et/ou d'au moins un poste d'emmagasinage (29) dédié à des produits d'usinage (6, 7) ; et **par le fait que** le système de convoyage automatique (11), et/ou le support (33) de produits doté d'un élément fixe d'appui de produits, est (sont) respectivement intégré(s) dans un poste d'emmagasinage (29) de ladite zone de stockage (27) dans la position de non-utilisation.

5. Agencement selon la revendication 4, **caractérisé par le fait que** la zone de stockage (27) comporte un rayonnage de stockage (28) pourvu d'au moins un poste d'emmagasinage (29) dédié à des pièces, en particulier des tôles (4) devant être usinées sur la machine d'usinage (2), et/ou d'au moins un poste d'emmagasinage (29) dédié à des produits d'usinage (6, 7), ainsi qu'un appareil de manoeuvre (30) assigné audit rayonnage de stockage (28) ; et **par le fait que** ledit appareil (30) de manoeuvre dudit rayonnage de stockage (28) est prévu en tant que dispositif de transport au moyen duquel le système de convoyage automatique (11), et/ou le support (33) de produits doté d'un élément fixe d'appui de produits, peu(ven)t être respectivement mu(s) vers la position d'utilisation à partir de la position de non-utilisation dans un poste d'emmagasinage (29) dudit rayonnage de stockage (28).

6. Agencement selon l'une des revendications précédentes, **caractérisé par le fait que** le système de convoyage automatique (11), et/ou le support (33) de produits doté d'un élément fixe d'appui de produits, est (sont) respectivement supporté(s) par une structure de support (13) dans la position d'utilisation.

7. Agencement selon la revendication 6, **caractérisé par le fait que** le système de transposition (10), en association avec des produits d'usinage (6, 7) réceptionnés par ce dernier, peut être mû sur la structure de support (13) vers le moyen de convoyage (14) du système de convoyage automatique (11) occupant la position d'utilisation, et/ou vers l'élément fixe d'appui des produits sur le support (33) de produits occupant ladite position d'utilisation.

8. Agencement selon l'une des revendications précédentes, **caractérisé par le fait qu'**il est prévu, au poste de décharge (12), un système de déchargement automatique (23, 26) au moyen duquel des produits d'usinage (6, 7) peuvent être réceptionnés d'un élément (20) d'appui des produits audit poste de décharge (12).

9. Agencement selon l'une des revendications précédentes, **caractérisé par le fait que** le système de déchargement automatique (23) au poste de décharge (12) comprend
• un convoyeur de transfert (19) au moyen duquel des produits d'usinage (6, 7) peuvent être mus sur l'élément (20) d'appui des produits audit poste de décharge (12), en accomplissant un mouvement des produits dans une direction de déchargement (25),
• ainsi qu'un réceptacle (24) de produits qui est disposé, dans la direction de la pesanteur, au-dessous desdits produits d'usinage (6, 7) mus sur ledit élément (20) d'appui des produits et qui, en accomplissant un mouvement d'enlèvement coordonné avec ledit mouvement des produits et s'opérant en simultanéité avec ledit mouvement des produits dans ladite direction de déchargement (25), peut être déplacé au-delà de la délimitation dudit élément (20) d'appui des produits audit poste de décharge (12), pointant dans cette direction,
des produits d'usinage (6, 7) pouvant alors être réceptionnés dudit élément (20) d'appui des produits, audit poste de décharge (12), suite audit mouvement des produits et au mouvement d'enlèvement par ledit réceptacle (24) de produits, exécuté en simultanéité.

10. Installation dévolue à la production, comprenant une machine d'usinage (2) affectée à l'usinage de pièces, en particulier de tôles (4), ainsi qu'un agencement (3, 43, 63, 83) conçu pour évacuer des produits d'usinage (6, 7) de ladite machine d'usinage (2), **caractérisée par** un agencement (3, 43, 63, 83) conçu pour évacuer des produits d'usinage (6, 7) et réalisé conformément à l'une des revendications précédentes.

11. Procédé d'évacuation de produits d'usinage (6, 7) d'une machine d'usinage (2) affectée à l'usinage de pièces, en particulier de tôles (4), sachant que
• des produits d'usinage (6, 7) en provenance de ladite machine d'usinage (2) sont réceptionnés par un système de transposition (10) et lesdits produits d'usinage (6, 7) réceptionnés par ledit système de transposition (10) sont transmis, par ledit système de transposition (10), à un moyen de convoyage (14) tournant sans fin dans un système de convoyage automatique (11) prévu en tant que système de transfert, et
• des produits d'usinage (6, 7), transmis audit système de transfert, sont transférés à un poste de décharge (12) et sont réceptionnés dans ce dernier,
**caractérisé par le fait**
• **que** le système de convoyage automatique (11) est mû, au moyen d'un dispositif de transport, vers une position d'utilisation dans laquelle le moyen de convoyage (14) dudit système de convoyage (11) est accessible à des produits d'usinage (6, 7) devant être transmis par le système de transposition (10), ou vers une position de non-utilisation située à l'écart de ladite position d'utilisation,
• **que** des produits d'usinage (6, 7) réceptionnés par ledit système de transposition (10) sont transmis, par ledit système de transposition (10), audit moyen de convoyage (14) tournant sans fin dans ledit système de convoyage automatique (11) mû vers ladite position d'utilisation, et
• **que** des produits d'usinage, ayant été transmis audit moyen de convoyage (14) dudit système de convoyage automatique (11) mû vers ladite position d'utilisation, sont transférés audit poste de décharge (12) à l'aide dudit moyen de convoyage (14).

12. Procédé selon la revendication 11, **caractérisé par le fait que** des produits d'usinage (6, 7) réceptionnés par le système de transposition (10) sont transmis, par ledit système de transposition (10), à un élément fixe d'appui de produits sur un support (33) de produits.

13. Procédé selon la revendication 12, **caractérisé par le fait que** le support (33) de produits, doté d'un élément fixe d'appui de produits, est sélectivement mû vers une position d'utilisation dans laquelle ledit élément d'appui des produits, sur ledit support (33) de produits, est accessible en vue de la transmission de produits d'usinage (6, 7) par l'intermédiaire du système de transposition (10), ou vers une position de non-utilisation située à l'écart de ladite position d'utilisation.

14. Procédé selon l'une des revendications précédentes, **caractérisé par le fait que** les produits d'usinage (6, 7) sont préparés en vue de la réception au poste de décharge (12).

15. Procédé de production dans le cadre duquel des pièces, en particulier des tôles (4), sont usinées au moyen d'une machine d'usinage (2) et des produits d'usinage (6, 7) sont évacués de ladite machine d'usinage (2), **caractérisé par** un procédé conçu en conformité avec l'une des revendications 11 à 14, pour évacuer des produits d'usinage (6, 7) de la machine d'usinage (2).
